# EUROPÄISCHE PATENTSCHRIFT

(11) **EP 2 383 852 B1**
(45) Veröffentlichungstag und Bekanntmachung des Hinweises auf die Patenterteilung: **01.01.2014**
(21) Anmeldenummer: 11154601.6
(22) Anmeldetag: 16.02.2011
(51) Int. Cl.: H01R 13/46, H02G 3/14

(54) **Elektrisches Installationsgerät**
Electric installation device
Appareil d'installation électrique

(30) Priorität: 27.04.2010 DE 102010016648
(43) Veröffentlichungstag der Anmeldung: 02.11.2011
(73) Patentinhaber: Berker GmbH & Co. KG, 58579 Schalksmühle (DE)
(72) Erfinder: Ludwig, Ralf, 58509, Lüdenscheid (DE)

(56) Entgegenhaltungen:
- EP-A2- 0 344 641
- DE-A1- 10 318 329
- DE-U1- 8 504 260

## Beschreibung

Die vorliegende Erfindung geht von einem gemäß Oberbegriff des Hauptanspruches konzipierten elektrischen Installationsgerät aus.

Derartige elektrische Installationsgeräte sind in der Regel dafür vorgesehen, in sogenannte Installationsdosen montiert zu werden. Damit auf einfache Art und Weise eine zuverlässige Befestigung der elektrischen Installationsgeräte gewährleistet ist, sind diese mit einem Träger versehen, der z. B. als Tragring oder Tragplatte ausgeführt sein kann. Über einen solchen Träger kann das elektrische Installationsgerät auf einfache Art und Weise an seinem Einbauort bzw. in seiner Installationsdose festgelegt werden. Oftmals sind solche elektrischen Installationsgeräte mit einem Beschriftungsschild versehen, um dieses für einen Benutzer mit Informationen versehen zu können. Solche elektrischen Installationsgeräte können z.B. als Schutzkontaktsteckdose, Schalter, Bewegungsmelder usw. ausgeführt sein.

Durch die EP 0 344 641 B ist ein dem Oberbegriff des Hauptanspruches entsprechendes elektrisches Installationsgerät bekannt geworden. Bei diesem elektrischen Installationsgerät wird ein Beschriftungsschild über Clipselemente in einem der üblicherweise vorhandenen, schlüssellochartig ausgeführten Befestigungslöcher des Tragringes festgelegt. Bei einer derartigen Befestigung kann dann dieses schlüssellochartige Befestigungsloch jedoch nicht mehr zur Festlegung des elektrischen Installationsgerätes an seinem Einbauort bzw. in seiner Installationsdose ausgenutzt werden. Außerdem besteht beim Bestücken und beim Entfernen eines solchermaßen ausgebildeten Beschriftungsschildes die nicht unerhebliche Gefahr, dass die Clipselemente beschädigt werden und dann eine einwandfreie Befestigung bzw. Wiederbefestigung des Beschriftungsschildes nicht mehr möglich ist.

Der vorliegenden Erfindung liegt deshalb die Aufgabe zugrunde, ein elektrisches Installationsgerät zu schaffen, bei dem ein universell nachrüstbares Beschriftungsschild auf einfache Art und Weise wieder lösbar direkt am Träger befestigt werden kann, wobei die Gefahr von Beschädigungen durch Montage bzw. Demontage wirkungsvoll vermindert ist.

Erfindungsgemäß wird diese Aufgabe durch die im Hauptanspruch angegebenen Merkmale gelöst.

Bei einer solchen Ausbildung ist besonders vorteilhaft, dass das Beschriftungsschild bei Bedarf auf einfache Art und Weise besonders sicher und exakt positioniert an einem der Außenkantenbereich des Trägers zu befestigen ist, sowie bei Bedarf auf einfache Art und Weise rückstandsfrei wieder entfernt werden kann.

Weitere vorteilhafte Ausgestaltungen des erfindungsgemäßen Gegenstandes sind in den Unteransprüchen angegeben. Anhand zweier Ausführungsbeispiele sei die Erfindung im Prinzip näher erläutert, dabei zeigt:

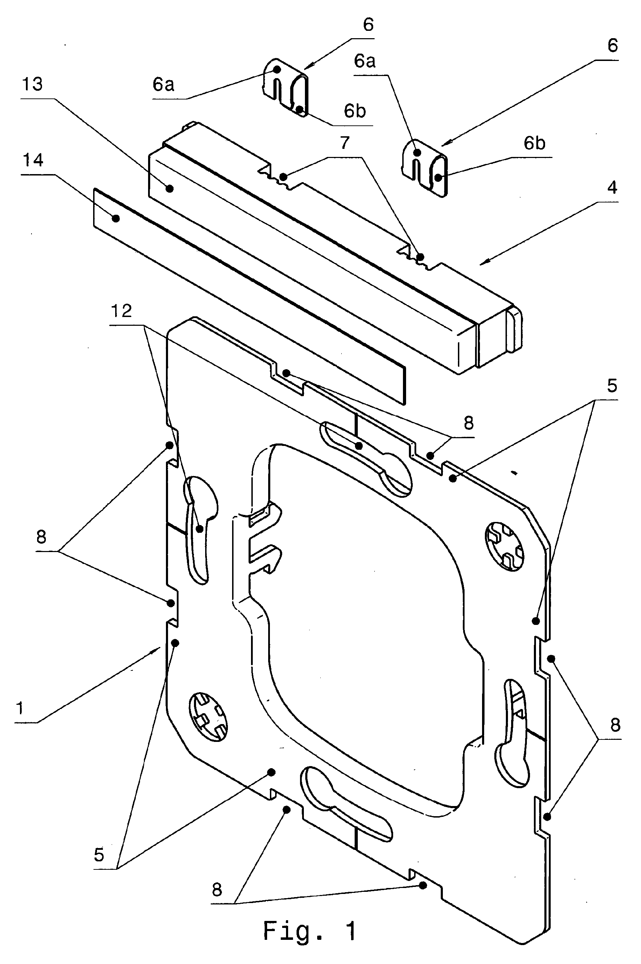

- Fig. 1:: prinziphaft den Träger eines solchen elektrischen Installationsgerätes und das Beschriftungsschild räumlich in Explosionsdarstellung gemäß erstem Ausführungsbeispiel;
- Fig.: 2:prinziphaft zwei elektrische Installationsgeräte, sowie den mit einer Betätigungswippe und einem Steckdosenzentralstück versehenen Abdeckrahmen, gemäß erstem Ausführungsbeispiel in räumlicher Darstellung;
- Fig. 3:: prinziphaft ein gemäß Figur 2 ausgeführtes elektrisches Installationsgerät im Zusammenbau;
- Fig. 4:: prinziphaft das Detail X gemäß Figur 3 im Schnitt, in vergrößerter Darstellung;
- Fig.: 5:prinziphaft den Träger eines solchen elektrischen Installationsgerätes und das Beschriftungsschild räumlich in Explosionsdarstellung gemäß zweitem Ausführungsbeispiel;
- Fig.: 6:prinziphaft zwei elektrische Installationsgeräte, sowie den mit einer Betätigungswippe und einem Steckdosenzentralstück versehenen Abdeckrahmen, gemäß zweitem Ausführungsbeispiel in räumlicher Darstellung;

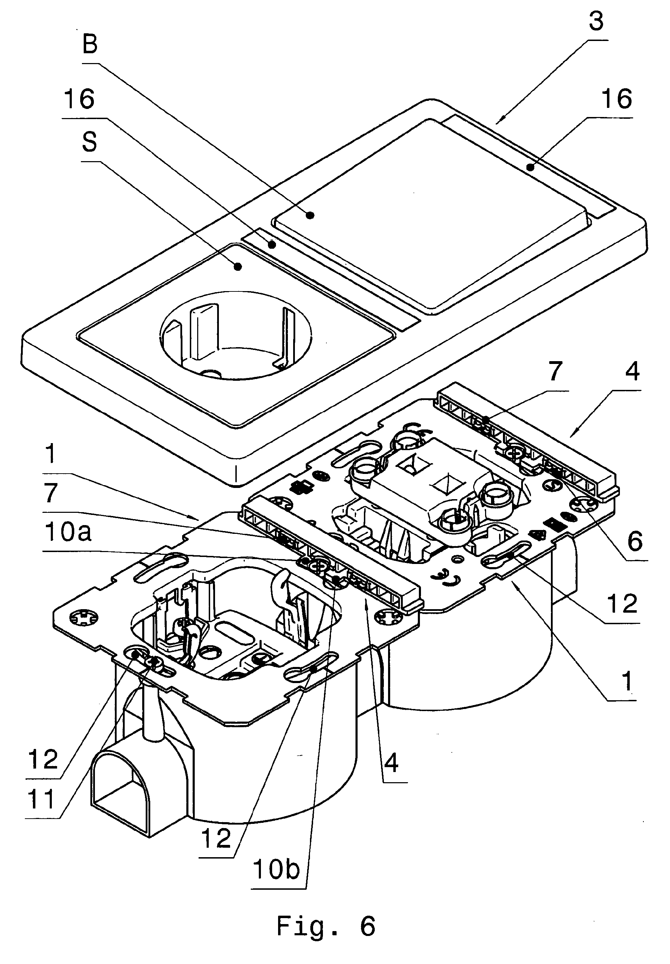

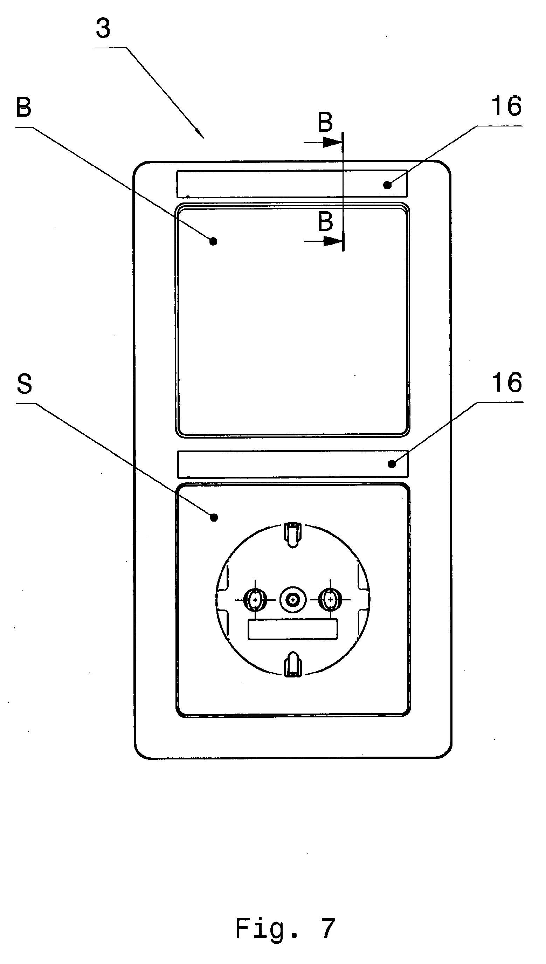

- Fig. 7:: prinziphaft ein gemäß Figur 6 ausgeführtes elektrisches Installationsgerät im Zusammenbau;

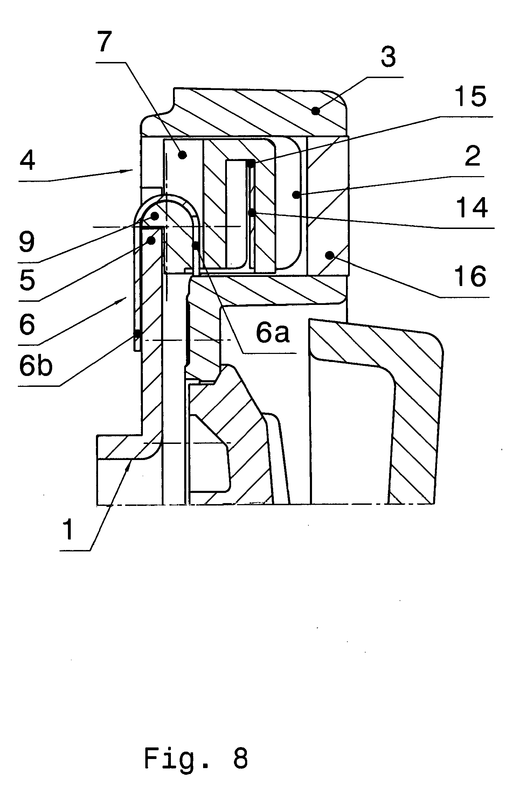

- Fig. 8:: prinziphaft das Detail Y gemäß Figur 7 im Schnitt, in vergrößerter Darstellung.

Wie aus den Figuren hervorgeht, weist ein solches elektrisches Installationsgerät im Wesentlichen einen zur Festlegung am Einbauort vorgesehenen Träger 1 und einen mit zumindest einem Sichtfenster 2 versehenen Abdeckrahmen 3, sowie ein am Träger 1 befestigtes Beschriftungsschild 4 auf.

Wie des weiteren aus den Figuren hervorgeht, ist jeweils ein Beschriftungsschild 4 an je einem Außenkantenbereich 5 des zugehörigen Trägers 1 festgelegt, wobei zur Festlegung jeweils zwei separat zu händelnde Klemmfedern 6 zur Anwendung kommen. Die beiden Klemmfedern 6 greifen jeweils mit einem ersten Federschenkel 6a in eine im Beschriftungsschild 4 vorhandene Haltetasche 7 ein und kommen mit einem zweiten Federschenkel 6b hinter der dem Abdeckrahmen 3 abgewandten Hauptfläche des Trägers 1 zu Liegen. Der erste Federschenkel 6a der Klemmfedern 6 ist jeweils gespalten ausgeführt, so dass sich zwei separat federnde Bereiche ergeben.

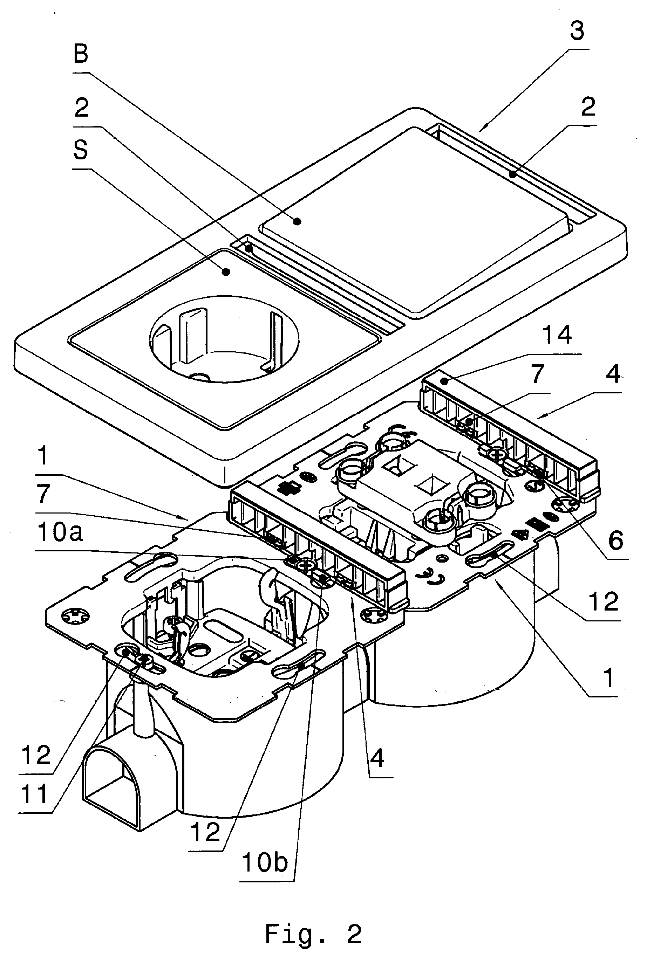

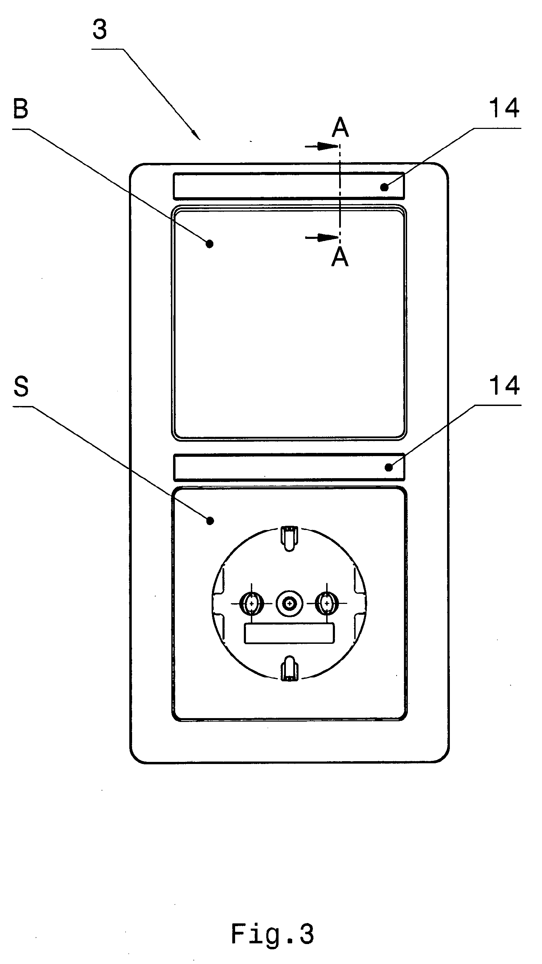

Wie insbesondere aus den Figuren 2, 3 sowie 6, 7 hervorgeht, kommen bei dieser Darstellung zwei elektrische Installationsgeräte zur Anwendung, welchen gemeinsam ein Abdeckrahmen 3 zugeordnet ist. Der Abdeckrahmen 3 ist mit zwei Sichtfenstern 2 versehen, welchen jeweils ein Beschriftungsschild 4 zugeordnet ist. Jedes der beiden Beschriftungsschilder 4 ist an einem der beiden Träger 1 des zugehörigen elektrischen Installationsgerätes festgelegt. Eines der elektrischen Installationsgeräte ist dabei als Wippenschalter und eines als Schutzkontaktsteckdose ausgeführt, so dass der Abdeckrahmen 3 entsprechend mit einer Betätigungswippe B und einem Steckdosenzentralstück S versehen ist.

Wie des weiteren aus den Figuren hervorgeht, sind in jeden der vier Außenkantenbereiche 5 des Trägers 1 zwei Halteausnehmungen 8 eingebracht, in welche kooperierend eine von zwei am Beschriftungsschild 4 vorhandenen Haltestegen 9 eingreift. Außerdem sind an jedem Beschriftungsschild 4 zwei Haltezapfen 10a, 10b vorhanden, welche bei Belassung eines Freiraums für eine Befestigungsschraube 11 in eines der schlüssellochartigen Befestigungslöcher 12 des Trägers 1 eingreifen. Wahlweise kann das Beschriftungsschild 4 derart ausgeführt werden, so dass dieses ein z. B. von Hand beschreibbares Beschriftungsfeld 13 aufweist und/oder mit einer Kennzeichnungsfolie 14 bestückbar ist. Die Kennzeichnungsfolie 14 kann selbstklebend ausgeführt sein.

Wie des weiteren aus den Figuren hervorgeht, kann das Beschriftungsschild 4 mit einer Aufnahmetasche 15 für eine einzuschiebende Kennzeichnungsfolie 14 versehen sein. Bei Verwendung dieser Aufnahmetasche 15 für die Kennzeichnungsfolie 14 muss dann das Beschriftungsschild 4 zumindest in diesem Bereich klar transparent ausgeführt sein, damit die auf dieser Kennzeichnungsfolie 14 abgebildeten Informationen für den Benutzer im Sichtfenster 2 deutlich erkennbar sind. Genau so gut kann das Beschriftungsschild 4 blickdicht ausgeführt sein, wenn entweder die Informationen z. B. von Hand direkt auf das Beschriftungsfeld 13 aufgetragen werden sollen oder aber auf dieses Beschriftungsfeld 13 eine selbstklebende Kennzeichnungsfolie 14 aufgebracht werden soll. Derart auf das Beschriftungsfeld 13 aufgebrachte Informationen sind dann für den Benutzer deutlich im entsprechenden Sichtfenster 2 erkennbar.

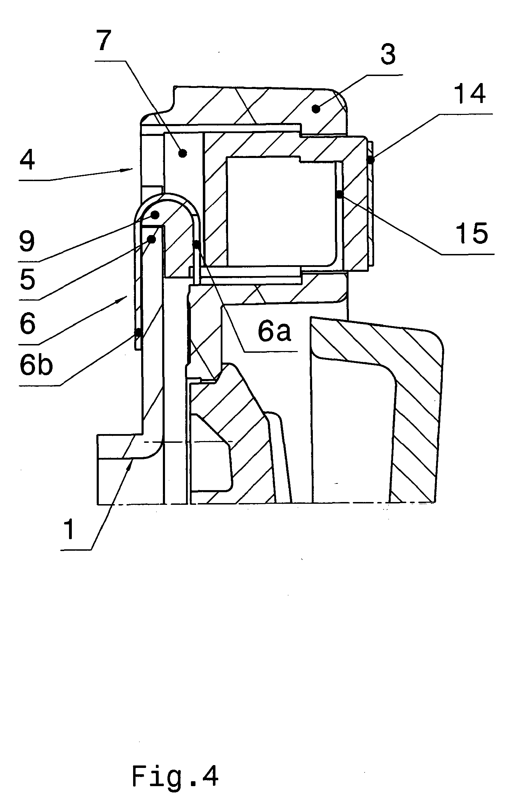

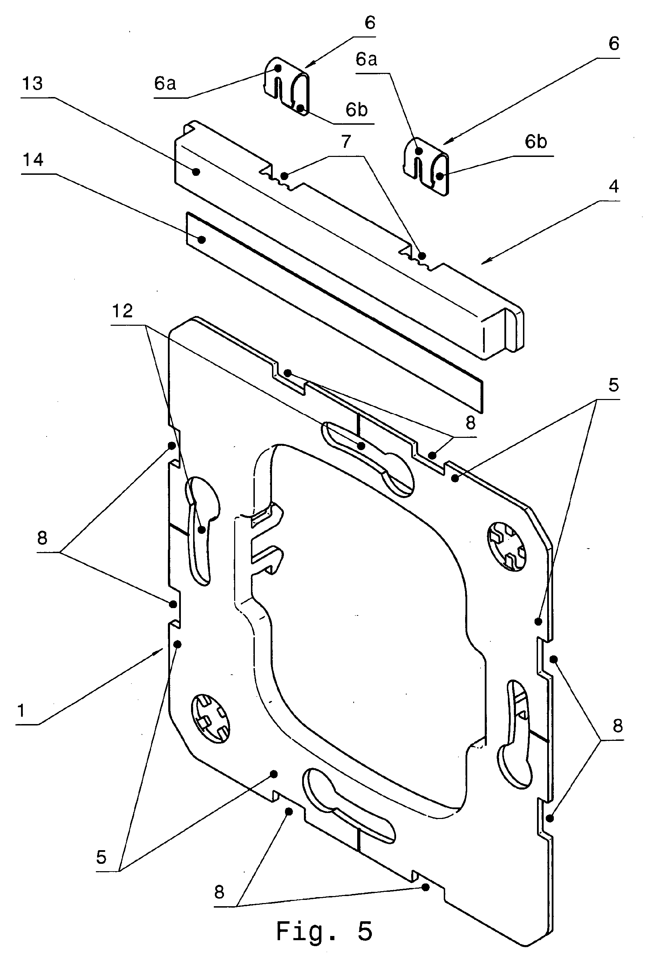

Wie insbesondere aus den Figuren 2, 3 und 4 hervorgeht, ist das Beschriftungsschild 4 stirnseitig mit einer Kennzeichnungsfolie 14 versehen, so dass die vorhandene Aufnahmetasche 15 frei von einer entsprechenden Kennzeichnungsfolie 14 bleibt. Der Abdeckrahmenrahmen 3 ist mit Sichtfenstern 2 ausgerüstet, welche durch eine unverschlossene Öffnung gebildet sind. Damit die auf dem Beschriftungsschild 4 bzw. der Kennzeichnungsfolie 14 abgebildete Information besonders deutlich für den Benutzer kenntlich wird, ist das Beschriftungsschild 4 derart ausgeführt, so dass es durch die das Sichtfenster 2 bildende unverschlossene Öffnung des Abdeckrahmens 3 hindurchtaucht und ein Stück über die Oberfläche des Abdeckrahmens 3 hervorsteht.

Wie insbesondere aus den Figuren 6, 7 und 8 hervorgeht, ist die Kennzeichnungsfolie 14 in der im Beschriftungsschild 4 vorhandenen Aufnahmetasche 15 angeordnet. Der entsprechende Sichtbereich des Beschriftungsfeldes 4 ist daher klar transparent ausgeführt, damit die auf dem Beschriftungsschild 4 bzw. der Kennzeichnungsfolie 14 abgebildete Information besonders deutlich für den Benutzer kenntlich wird. Die das Sichtfenster 2 bildende Öffnung des Abdeckrahmens 3 ist mit einer klar transparenten Scheibe 16 verschlossen.

Auf einfache Art und Weise ist somit ein elektrisches Installationsgerät geschaffen, bei dem ein universell nachrüstbares Befestigungsschild 4 auf einfache Art und Weise wieder lösbar direkt am Träger 1 befestigt werden kann. Dabei ist durch die Art der Ausbildung die Gefahr von Beschädigungen durch Montage bzw. Demontage wirkungsvoll vermieden. Das Beschriftungsschild 4 ist dabei auf einfache Art und Weise besonders sicher und exakt positioniert an einem der Außenkantenbereich 5 des Trägers 1 zu befestigen, sowie bei Bedarf auf einfache Art und Weise rückstandsfrei wieder entfernbar, weil keine Klebemittel zur Anwendung kommen.

## Patentansprüche

1. Elektrisches Installationsgerät mit einem zur Festlegung am Einbauort vorgesehenen Träger (1) und einem mit zumindest einem Sichtfenster (2) versehenen Abdeckrahmen (3), sowie einem am Träger, befestigen Beschriftungsschild (4) an zumindest einem Außenkantenbereich (5) des Trägers (1) **dadurch gekennzeichnet dass** das Beschriftungsschild (4) an diesen aussenkantenbereich (5) mittels zumindest einer Klemmfeder (6) festgelegt ist.

2. Elektrisches Installationsgerät nach Anspruch 1, **dadurch gekennzeichnet, dass** zur Festlegung des Beschriftungsschildes (4) zumindest eine separat zu händelnde Klemmfeder (6) vorgesehen ist.

3. Elektrisches Installationsgerät nach einem der Ansprüche 1 oder 2, **dadurch gekennzeichnet, dass** zumindest eine Klemmfeder(6) mit einem ersten Federschenkel (6a) in eine im Beschriftungsschild (4) vorhandene Haltetasche (7) eingreift und mit einem zweiten Federschenkel (6b) hinter der dem Abdeckrahmen (3) abgewandten Hauptfläche des Trägers (1) zu Liegen kommt.

4. Elektrisches Installationsgerät nach einem der Ansprüche 1 bis 3, **dadurch gekennzeichnet, dass** im Außenkantenbereich (5) des Trägers (1) zumindest eine Halteausnehmung (8) vorhanden ist, in welche kooperierend zumindest ein am Beschriftungsschild (4) vorhandener Haltesteg (9) eingreift.

5. Elektrisches Installationsgerät nach einem der Ansprüche 1 bis 4, **dadurch gekennzeichnet, dass** am Beschriftungsschild (4) zumindest ein Haltezapfen (10a, 10b) vorhanden ist, welcher bei Belassung eines Freiraums für eine Befestigungsschraube (11) in eines der schlüssellochartigen Befestigungslöcher (12) des Trägers (1) eingreift.

6. Elektrisches Installationsgerät nach einem der Ansprüche 1 bis 5, **dadurch gekennzeichnet, dass** im Beschriftungsschild (4) eine den Außenkantenbereich (5) des Trägers (1) aufnehmende Nut vorhanden ist.

7. Elektrisches Installationsgerät nach einem der Ansprüche 1 bis 6, **dadurch gekennzeichnet, dass** das Beschriftungsschild (4) zumindest ein von Hand beschreibbares Beschriftungsfeld (13) aufweist.

8. Elektrisches Installationsgerät einem der Ansprüche 1 bis 7, **dadurch gekennzeichnet, dass** das Beschriftungsschild (4) zumindest ein mit einer Kennzeichnungsfolie (14) bestückbares Beschriftungsfeld (13) aufweist.

9. Elektrisches Installationsgerät nach einem der Ansprüche 1 bis 8, **dadurch gekennzeichnet, dass** das Beschriftungsschild (4) zumindest eine, mit einer Kennzeichnungsfolie (14) bestückbare Aufnahmetasche (15) aufweist.

10. Elektrisches Installationsgerät nach einem der Ansprüche 1 bis 8, **dadurch gekennzeichnet, dass** das Beschriftungsschild (4) zumindest teilweise klar transparent ausgeführt ist.

11. Elektrisches Installationsgerät nach einem der Ansprüche 1 bis 9, **dadurch gekennzeichnet, dass** das Beschriftungsschild (4) zumindest teilweise blickdicht ausgeführt ist.

12. Elektrisches Installationsgerät nach einem der Ansprüche 1 bis 10, **dadurch gekennzeichnet, dass** zumindest ein Sichtfenster (2) des Abdeckrahmens (3) mit einer transparenten Scheibe (16) versehen ist.

13. Elektrisches Installationsgerät nach einem der Ansprüche 1 bis 12, **dadurch gekennzeichnet, dass** zumindest ein Sichtfenster (2) des Abdeckrahmens (3) durch eine unverschlossene Öffnung gebildet ist.

## Claims

1. Electrical installation device having a carrier (1) provided for localisation purposes at the place of installation and having a cover frame (3) provided with at least one viewing window (2), and having an inscription plate (4) attached to the carrier in at least one outer edge zone (5) of the carrier (1), **characterised in that** the inscription plate (4) is localised on this outer edge zone (5) by means of at least one spring clip (6).

2. Electrical installation device according to Claim 1, **characterised in that** at least one spring clip (6), which is to be handled separately, is provided for localising the inscription plate (4).

3. Electrical installation device according to Claim 1 or Claim 2, **characterised in that** at least one spring clip (6) engages with its first spring leg (6a) in a retention pocket (7) provided in the inscription plate (4) and comes to rest with its second spring leg (6b) behind the main surface of the carrier (1) facing away from the cover frame (3).

4. Electrical installation device according to any of Claims 1 to 3, **characterised in that** there is at least one retention recess (8) in the outer edge zone (5) of the carrier (1) in which at least one retention bar (9) provided on the inscription plate (4) engages in a cooperating manner.

5. Electrical installation device according to any of Claims 1 to 4, **characterised in that** at least one retaining pin (10a, 10b) is provided on the inscription plate (4) which engages in one of the keyhole-like fastening holes (12) on the carrier (1) whilst leaving space for a fastening screw (11).

6. Electrical installation device according to any of Claims 1 to 5, **characterised in that** a groove is provided in the inscription plate (4) for accommodating the outer edge zone (5) of the carrier (1).

7. Electrical installation device according to any of Claims 1 to 6, **characterised in that** the inscription plate (4) has at least one inscription field (13) which can be inscribed by hand.

8. Electrical installation device according to any of Claims 1 to 7, **characterised in that** the inscription plate (4) has at least one inscription field (13) which can be equipped with a labelling film (14).

9. Electrical installation device according to any of Claims 1 to 8, **characterised in that** the inscription plate (4) has at least one retaining pocket (15) which can be equipped with a labelling film (14).

10. Electrical installation device according to any of Claims 1 to 8, **characterised in that** the inscription plate (4) is at least partially of a clear, transparent design.

11. Electrical installation device according to any of Claims 1 to 9, **characterised in that** the inscription plate (4) is at least partially of an opaque design.

12. Electrical installation device according to any of Claims 1 to 10, **characterised in that** at least one viewing window (2) of the cover frame (3) is provided with a transparent sheet (16).

13. Electrical installation device according to any of Claims 1 to 12, **characterised in that** at least one viewing window (2) of the cover frame (3) is formed by an uncovered opening.

## Revendications

1. Appareil d'installation électrique comportant un support (1) prévu pour permettre une fixation à l'endroit de montage, et un cadre cache (3) muni d'au moins une fenêtre (2), ainsi que d'une plaquette étiquette (4) fixée au support, présentant un bord extérieur (5) du support (1), **caractérisé en ce que** la plaquette étiquette (4) est fixée à ce bord extérieur (5) à l'aide d'au moins un ressort de serrage (6).

2. Appareil d'installation électrique selon la revendication 1, **caractérisé en ce que** au moins un ressort de serrage (6) manipulable séparément est prévu pour la fixation de la plaquette étiquette (4).

3. Appareil d'installation électrique selon l'une des revendications 1 ou 2, **caractérisé en ce que** au moins un ressort de serrage (6) prend par une première branche de ressort (6a) dans une poche de fixation (7) située dans la plaquette étiquette (4), et est disposé, par une seconde branche de ressort (6b), derrière la surface principale du support (1) tournée du côté opposé au cadre cache (3).

4. Appareil d'installation électrique selon l'une des revendications 1 à 3, **caractérisé en ce que**, dans le domaine du bord extérieur (5) du support (1), au moins un évidement de fixation (8) est donné, évidement dans lequel prend, en coopération, au moins une baguette de maintien (9) se trouvant sur la plaquette étiquette (4).

5. Appareil d'installation électrique selon l'une des revendications 1 à 4, **caractérisé en ce que** se trouve sur la plaquette étiquette (4) au moins un ergot de maintien (10a, 10b), ergot prenant dans l'un des trous de fixation (12) en forme de trou de serrure du support (1) tout en laissant suffisamment de place pour une vis de fixation (11).

6. Appareil d'installation électrique selon l'une des revendications 1 à 5, **caractérisé en ce que** se trouve dans la plaquette étiquette (4) une rainure accueillant le bord extérieur (5) du support (1).

7. Appareil d'installation électrique selon l'une des revendications 1 à 6, **caractérisé en ce que** la plaquette étiquette (4) présente au moins une case étiquette (13) permettant d'apporter une inscription à la main.

8. Appareil d'installation électrique selon l'une des revendications 1 à 7, **caractérisé en ce que** la plaquette étiquette (4) présente au moins une case étiquette (13) pouvant être équipée d'un film de marquage (14).

9. Appareil d'installation électrique selon l'une des revendications 1 à 8, **caractérisé en ce que** la plaquette étiquette (4) présente au moins une poche d'accueil (15) pouvant être équipée d'un film de marquage (14).

10. Appareil d'installation électrique selon l'une des revendications 1 à 8, **caractérisé en ce que** la plaquette étiquette (4) est réalisée au moins en partie sous forme transparente claire.

11. Appareil d'installation électrique selon l'une des revendications 1 à 9, **caractérisé en ce que** la plaquette étiquette (4) est réalisée au moins en partie sous forme opaque.

12. Appareil d'installation électrique selon l'une des revendications 1 à 10, **caractérisé en ce que** au moins une fenêtre (2) du cadre cache (3) est munie d'une vitre transparente (16).

13. Appareil d'installation électrique selon l'une des revendications 1 à 12, **caractérisé en ce que** au moins une fenêtre (2) du cadre cache (3) est réalisée sous forme d'orifice ouvert.
